# EUROPÄISCHE PATENTSCHRIFT

(11) **EP 0 442 293 B1**
(45) Veröffentlichungstag und Bekanntmachung des Hinweises auf die Patenterteilung: **21.07.1993**
(21) Anmeldenummer: 91100808.4
(22) Anmeldetag: 23.01.1991
(51) Int. Cl.: F04D 29/42, F16B 5/00

(54) **Lüftergehäuse**
Fan casing
Boîtier d'un ventilateur

(30) Priorität: 12.02.1990 DE 4004069
(43) Veröffentlichungstag der Anmeldung: 21.08.1991
(73) Patentinhaber: Alcatel SEL Aktiengesellschaft, D-70435 Stuttgart (DE)
(72) Erfinder: Eichhorn, Werner, W-8300 Landshut (DE)
(74) Vertreter: Pohl, Herbert, Dipl.-Ing.

(56) Entgegenhaltungen:
- EP-A- 0 278 998
- US-A- 2 456 488
- US-A- 3 619 080
- Katalog MOTORS AND BLOWERS, Standard Elektrik Lorenz AG.Business DivisionComponents.Edition 1990.6650/3643 E-10.90-1.PV *page 60
- PATENT ABSTRACTS OF JAPAN vol. 13, no. 455 (M-879)(3803) 13 Oktober 1989,& JP-A-1177499 (MATSUSHITA ELECTRIC IND.) 13 Juli 1989,
- PATENT ABSTRACTS OF JAPAN vol. 5, no. 139 (M-86)(811) 3 September 1981,& JP-A-56 72299 (ADVANCE K.K.) 16 Juni 1981,

## Beschreibung

Die Anmeldung betrifft ein aus Blech gefertigtes, aus zwei Seitenteilen und einem Gehäusemantel bestehendes Lüftergehäuse, dessen Seitenteile mit einem im rechten Winkel von der Seitenteiloberfläche abstehenden, um die Ränder des Gehäusemantels herumgreifenden hochgestellten Rand versehen sind und die Ränder des Gehäusemantels eine Mehrzahl von Laschen aufweisen, welche durch Schlitze in den Seitenteilen hindurchgesteckt und umgebogen sind.

Ein solches Lüftergehäuse ist bekannt (Katalog: "Lüfter" der Standard Elektrik Lorenz AG, Geschäftsbereich Motoren, 8300 Landshut).

Bei dem bekannten Lüftergehäuse sind die Laschen um 180 Winkelgrade derart um den Bördelrand herumgebogen, daß sie im Endzustand parallel zur Oberfläche des Gehäusemantels liegen.

Dieser bekannte Aufbau des Lüftergehäuses weist mehrere Nachteile auf. Ein Nachteil besteht darin, daß das bekannte Lüftergehäuse an den Stellen, wo die Laschen durch die Schlitze in den Seitenteilen hindurchgesteckt sind, nicht dicht ist. Lüfter mit den bekannten Lüftergehäusen können daher nicht zur Förderung von brennbaren Gasen oder Gasgemischen eingesetzt werden.

Ein weiterer Nachteil ist darin zu sehen, daß die umgebogenen Lappen über die Außenabmessungen des Lüftergehäuses vorstehen, wodurch eine größere Einbauöffnung erforderlich ist und außerdem Verletzungsgefahr an den vorstehenden scharfen Kanten der Laschen besteht.

Das der Erfindung zugrundeliegende technische Problem besteht nun darin, das bekannte Lüftergehäuse in der Weise zu ändern, daß es eine größere Dichtheit als das bekannte Lüftergehäuse aufweist.

Dieses technische Problem ist erfindungsgemäß dadurch gelöst, daß in den Seitenteilen am Ort der Laschen Vertiefungen vorgesehen und die Laschen derart um wenigstens 90 Winkelgrade umgebogen sind, daß sie parallel zur Seitenteiloberfläche in den Vertiefungen liegen.

Lappenverbindungen an Blechteilen sind an sich bekannt, z.B. sind in der EP-A-0 278 998 verschiedene Beispiele aufgeführt, wie zwei Blechteile, die flach aufeinander liegen, mittels freigeschnittener Lappen oder Laschen miteinander verbunden werden. Dabei sind aus dem einen Blechteil die Lappen frei geschnitten und hochgebogen. Das zweite Blechteil wird so auf das erste gelegt, daß es die Ausschnitte bedeckt und mit dem Rand gegen die Lappen stößt. Dann werden letztere unter solchem Druck wieder gegen ihre Ausschnitte zurückgebogen, daß die dazwischen liegenden Abschnitte des zweiten Blechteiles in die Ausschnitte hineingedrückt werden. Dadurch entsteht eine unlösbare und unverrückbare Verbindung, weil die vertieften Abschnitte des zweiten Blechteiles zwischen Lappen und Ausschnitten des ersten Blechteiles jeweils an allen vier Kanten fixiert sind.

Das erfindungsgemäße Lüftergehäuse weist eine größere Dichtheit als das bekannte Lüftergehäuse auf. Außerdem ragen bei dem erfindungsgemäßen Lüftergeäuse die Lappen nicht mehr über die Außenabmessungen hinaus, wodurch das Lüftergehäuse weniger raumgreifend und die Verletzungsgefahr durch die Laschen verringert ist.

Die Erfindung ist nachstehend anhand der Figuren 1 bis 4 erläutert. Es zeigen:
- Fig. 1: die Vorderansicht eines Lüftergehäuses für einen Radiallüfter,
- Fig. 2: die Seitenansicht des Lüftergehäuses gemäß Fig. 1,
- Fig. 3: die Draufsicht auf einen Ausschnitt aus dem Lüftergehäuse gemäß Fig. 2 im Bereich der Lasche und
- Fig. 4: den Schnitt CD durch die Lasche gemäß Fig. 3.

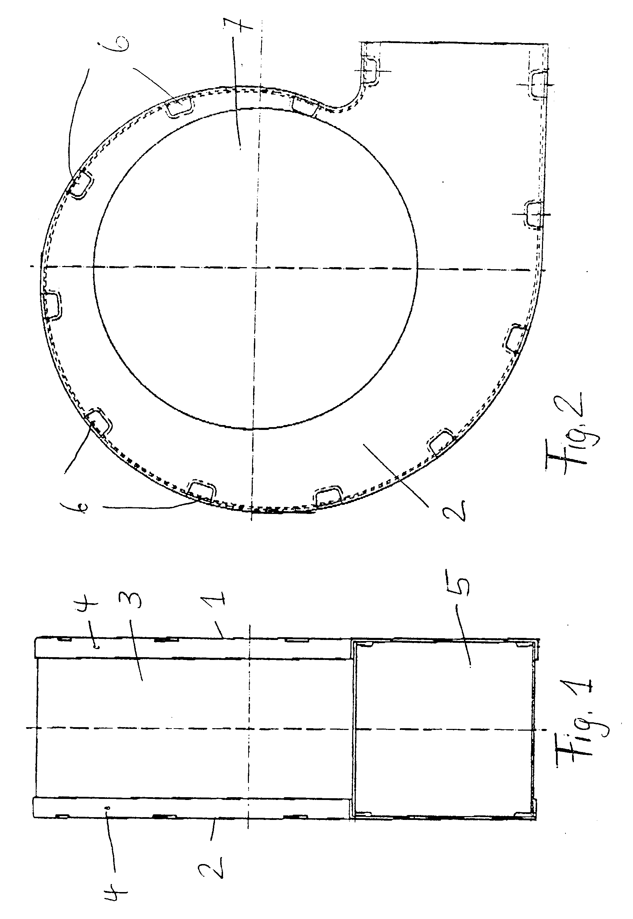

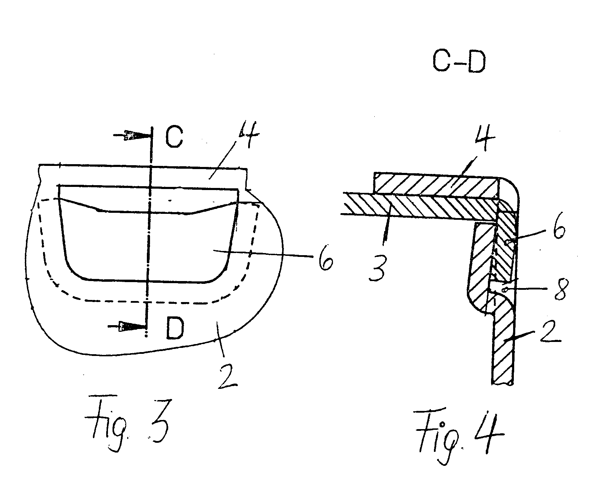

Aus Fig. 1 ist zu erkennen, daß das Lüftergehäuse aus den beiden Seitenteilen 1 und 2 sowie dem Gehäusemantel 3 besteht. Die Seitenteile 1 und 2 besitzen den hochgestellten Rand 4, der um die - nicht sichtbaren - Ränder des Gehäusemantels 3 herumgreift. Das Lüftergehäuse weist die Ausblasöffnung 5 auf.

Die Seitenteile 1 und 2 sind dadurch mit dem Gehäusemantel 3 verbunden, daß eine Mehrzahl von mit den Rändern des Gehäusemantels verbundenen Laschen 6 durch Schlitze in den Seitenteilen 1, 2 hindurchgesteckt und parallel zur Oberfläche der Seitenteile 1, 2 umgebogen sind.

In Fig. 2 ist die Ansaugöffnung 7 zu erkennen.

Die Figuren 3 und 4 verdeutlichen die erfindungsgemäßen Veränderungen an dem Lüftergehäuse. In dem Ausschnitt gemäß Fig. 3 sind ein Stück des Seitenteils 2, die Lasche 6 und der hochgestellte Rand 4 zu erkennen.

Fig. 4 zeigt, wie der hochgestellte Rand 4 um den Rand des Gehäusemantels 3 herumgreift und daß im Seitenteil 2 im Bereich der Lasche 6 die Vertiefung 8 eingeprägt ist, in welcher die Lasche 6 eingebettet ist.

Wie in Fig. 4 ebenfalls verdeutlicht ist, ist die Lasche 6 aus fertigungstechnischen Gründen um etwas mehr als 90°, beispielsweise um 95°, umgebogen.

## Patentansprüche

1. Aus Blech gefertigtes, aus zwei Seitenteilen und einem Gehäusemantel bestehendes Lüftergehäuse, dessen Seitenteile mit einem im rechten Winkel von der Seitenteiloberfläche abstehenden, um die Ränder des Gehäusemantels herumgreifenden hochgestellten Rand versehen sind und die Ränder des Gehäusemantels eine Mehrzahl von Laschen aufweisen, welche durch Schlitze in den Seitenteilen hindurchgesteckt und umgebogen sind, **dadurch gekennzeichnet,** daß in den Seitenteilen (1, 2) am Ort der Laschen (6) Vertiefungen (8) vorgesehen und die Laschen derart um wenigstens 90 Winkelgrade umgebogen sind, daß sie parallel zur Seitenteiloberfläche in den Vertiefungen (8) liegen.

## Claims

1. A fan housing made of sheet metal and consisting of two side parts and a housing casing, the side parts of which are provided with a raised edge projecting at right angles from. the surface of the side parts and gripping round the edges of the housing casing, wherein the edges of the housing casing comprise a plurality of flaps which are pushed through slots in the side parts and bent over, **characterized in** that recesses (8) are provided in the side parts (1, 2) at the position of the flaps (6) and the said flaps are bent over by at least 90 angular degrees in such a way that they lie in the recesses (8) parallel to the surface of the side parts.

## Revendications

1. Un boîtier de ventilateur fabriqué en tôle, composé de deux parties latérales et d'une enveloppe de boîtier, dont les parties latérales sont munies d'un bord en saillie s'étendant à angle droit à partir de la surface des parties latérales et à accrochage périphérique avec les bords de l'enveloppe de boîtier comportant une pluralité de pattes, qui pénètrent à travers des fentes dans ces parties latérales et qui sont rabattues, caractérisé en ce que l'on prévoit des creusures (8) dans les parties latérales (1, 2) à l'endroit où les pattes (6) se trouvent et que les pattes sont rabattues à un angle d'au moins 90°, de telle-sorte qu'elles sont parallèles à la surface des parties latérales et qu'elles se trouvent dans les creusures (8).
